# EUROPÄISCHE PATENTANMELDUNG

(11) **EP 2 923 886 A1**
(43) Veröffentlichungstag der Anmeldung: **30.09.2015**
(21) Anmeldenummer: 15159541.0
(22) Anmeldetag: 18.03.2015
(51) Int. Cl.: B60N 2/48

(54) **Kopfstütze für einen Fahrzeugsitz**

(30) Priorität: 24.03.2014 DE 102014205456
(71) Anmelder: Ford Global Technologies, LLC, Dearborn, MI 48126 (US)
(72) Erfinder: Wagner, Uwe, 42929 Wermelskirchen (DE); Schauf, Carsten, 50769 Köln (DE); Hari, Daniel, 50735 Köln (DE); Murray, Andy, Colchester, Essex CO3 3QW (GB); Vas, Kilian, 50670 Köln (DE)
(74) Vertreter: Dörfler, Thomas

(57) **Zusammenfassung**

Die Erfindung betrifft eine Kopfstütze (1), umfassend ein Mittelteil (5), ein Befestigungsmittel (2) zur Befestigung des Mittelteils (5) an einer Rückenlehne (3) eines Fahrzeugsitzes und wenigstens einen Seitenflügel (6). Der Seitenflügel (6) ist gegenüber dem Mittelteil (5) zwischen einer Neutralstellung und mindestens einer Komfortstellung schwenkbeweglich gelagert und wenigstens in der Komfortstellung fixierbar. Das Befestigungsmittel (2) ist dazu ausgelegt das Mittelteil (5) relativ zu der Rückenlehne (3) um eine horizontale Schwenkachse (7) schwenkbar zu lagern. Das Mittelteil (5) ist zwischen einer Parkstellung und wenigstens einer Stützstellung schwenkbeweglich und wenigstens in der Stützstellung fixierbar.

Ferner betrifft die Erfindung einen Fahrzeugsitz mit einer derartigen Kopfstütze (1).

## Beschreibung

Die vorliegende Erfindung betrifft eine Kopfstütze zur Befestigung an einer Rückenlehne eines Fahrzeugsitzes nach dem Oberbegriff des Anspruch 1, sowie einen Fahrzeugsitz mit einer Kopfstütze gemäß einem der Ansprüche 1-8.

Bei bekannten Kopfstützen für Fahrzeugsitze konkurrieren Funktionalität, Komfort und Bauvolumen miteinander. Zum einen soll die Kopfstütze einem Nutzer eine gute Kopfanpassung mit Schutzfunktion gegen äußere Krafteinwirkungen bieten können, zum anderen soll die Sicht eines Fahrers durch die Kopfstützen unbesetzter Sitze nicht unnötig eingeschränkt werden. Aus dem Stand der Technik sind bereits Kopfstützen mit Seitenelementen zur Verbesserung der Kopfanpassung bekannt, die sich auch mit dem Problem der Sichtoptimierung befassen.

Die DE 198 51 027 A1 offenbart eine Kopfstütze für Fahrzeugsitze mit einem mittleren Kopfpolsterteil und zwei seitlich daran angeordneten, verschwenkbaren Elementen. Bei Nicht-Gebrauch können die seitlichen Elemente, zur Optimierung der Sicht eines Fahrers, platzsparend in die Kontur des mittleren Kopfpolsterteils eingeschwenkt werden, und so wird die Sicht nicht mehr gehemmt als bei einer Kopfstütze ohne Seitenelemente.

Vor diesem Hintergrund liegt der vorliegenden Erfindung die Aufgabe zugrunde, eine Kopfstütze zur Befestigung an einer Rückenlehne eines Fahrzeugsitzes, insbesondere eines Autositzes, bereitzustellen, die eine gute Kopfanpassung bietet und derart ausgestaltet ist, dass bei Nicht-Gebrauch die Sichteinschränkung eines Fahrers minimiert werden kann. Ferner soll ein Fahrzeugsitz mit einer entsprechenden Kopfstütze bereitgestellt werden, der ebenfalls von einem optimierten Bauvolumen profitiert.

Diese Aufgabe wird durch eine Kopfstütze mit den Merkmalen des Anspruch 1 sowie durch einen Fahrzeugsitz gemäß Anspruch 9 gelöst. Weitere Vorteile und Merkmale der Erfindung ergeben sich aus den Unteransprüchen.

Es ist darauf hinzuweisen, dass die in den Ansprüchen einzeln aufgeführten Merkmale in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Eine erfindungsgemäße Kopfstütze umfasst ein Mittelteil, ein Befestigungsmittel, und wenigstens einen Seitenflügel. Das Befestigungsmittel ist dazu ausgelegt das Mittelteil an einer Rückenlehne eines Fahrzeugsitzes zu befestigen. Bevorzugt sind das Mittelteil und der Seitenflügel gepolstert. Beispielsweise umfassen das Mittelteil und der wenigstens eine Seitenflügel je eine Grundplatte, die mit je einer Randseite aneinander angeordnet sind und einen Winkel miteinander einschließen. Insbesondere ist die Grundplatte des Mittelteils derart ausgebildet, dass sich eine Randseite parallel zu der Oberseite der Rückenlehne erstreckt und der Seitenflügel ist an einer daran angrenzenden Randseite angeordnet. In einer Ausgestaltung sind Polsterungen auf den Grundplatten angeordnet.

Erfindungsgemäß ist der mindestens eine Seitenflügel gegenüber dem Mittelteil, zwischen einer Neutralstellung und wenigstens einer Komfortstellung, schwenkbeweglich gelagert und wenigstens in der einen Komfortstellung fixierbar. Insbesondere ist der Seitenflügel in der Neutralstellung derart an dem Mittelteil angeordnet, dass die Kopfstütze ihre flachste mögliche Ausgestaltung aufweist. Beispielsweise schließt in der Neutralstellung eine Grundplatte des Mittelteils und eine Grundplatte des Seitenflügels einen Winkel von 180° miteinander ein, wodurch eine flache Ausgestaltung der Kopfstütze bewirkt werden kann.

In der wenigstens einen Komfortstellung ist der Seitenflügel gegenüber dem Mittelteil aus seiner Neutralstellung heraus verschwenkt. Insbesondere ist der Seitenflügel in mehreren Komfortstellungen fixierbar. Durch den vom Mittelteil abgewinkelten Seitenflügel kann ein Nutzer seinen Kopf bequem anlehnen und der Seitenflügel kann zudem Schutz gegen seitliche Krafteinwirkung bieten. Beispielsweise schließt der Seitenflügel in der Komfortstellung einen Winkel zwischen 170° und 90° mit dem Mittelteil ein.

Erfindungsgemäß ist das Befestigungsmittel dazu ausgelegt, das Mittelteil relativ zu der Rückenlehne, um eine horizontale Schwenkachse zwischen wenigstens einer Stützstellung und einer Parkstellung schwenkbar zu lagern. Beispielsweise ist das Mittelteil in einem Winkelbereich von 180° um die horizontale Schwenkachse schwenkbar. Insbesondere ist das Mittelteil in einem Winkelbereich von 110° um die horizontale Schwenkachse schwenkbar. Weiter ist das Mittelteil in der wenigstens einen Stützstellung fixierbar. Bevorzugt bildet das Mittelteil in einer ersten Stützstellung im Wesentlichen eine Verlängerung der Rückenlehne aus. Besonders bevorzugt ist das Mittelteil durch Verschwenkung in Richtung der Front oder des Hecks des Fahrzeugs in weiteren Stützstellungen fixierbar.

Die Stützstellung und die Parkstellung sind beispielsweise durch den Winkel definiert, den das Mittelteil mit einem vertikalen Lot einschließt. Besonders bevorzugt ist die Kopfstütze in Richtung des Hecks eines Fahrzeugs verschwenkbar.

Parkstellung im Sinne der Erfindung meint nicht, dass sich die Kopfstütze bevorzugt in einem parkenden Fahrzeug in dieser Position befindet. Vielmehr ist damit die Position gekennzeichnet, in der sich die Kopfstütze bevorzugt befinden kann wenn die Kopfstütze nicht durch einen Nutzer im Gebrauch ist. Insbesondere ist die vertikale Ausdehnung der Kopfstütze in der Parkstellung am geringsten, so dass die Sicht eines Fahrers am wenigsten beeinträchtigt wird. Besonders bevorzugt ist das Mittelteil in der Parkstellung im Wesentlichen parallel zur Sitzfläche des Fahrzeugsitzes orientiert. Beispielsweise schließt das Mittelteil in der Parkstellung einen Winkel von 90° mit dem vertikalen Lot ein.

Gemäß einer vorteilhaften Ausgestaltung umfasst die Kopfstütze zwei an dem Mittelteil angeordnete Seitenflügel, die in der Parkstellung des Mittelteils diametral von dem Mittelteil abstehen, wodurch eine flache Ausgestaltung der Kopfstütze realisierbar ist. Beispielsweise umfassen das Mittelteil und die Seitenflügel jeweils eine im Wesentlichen viereckige Grundplatte, und die Grundplatten der Seitenflügel sind an gegenüberliegenden Randseiten der viereckigen Grundplatte des Mittelteils angeordnet. Erstrecken sich die Seitenflügel diametral von dem Mittelteil weg so schließt die Grundplatte des Mittelteils mit den beiden Grundplatten der Seitenflügel je einen Winkel von 180° ein, was der bevorzugten Neutralstellung der Seitenflügel entspricht. Die beiden Seitenflügel können insbesondere unabhängig voneinander in verschiedenen Komfortstellungen fixiert werden. Ein Nutzer kann somit die Kopfstütze individuell nach seinen Bedürfnissen einstellen.

Bevorzugt sind die Seitenflügel um zwei spiegelsymmetrisch zueinander angeordnete Schwenkachsen schwenkbar. Beispielsweise verlaufen die beiden Schwenkachsen parallel zueinander. Gemäß einer weiteren Ausgestaltung erstreckt sich die Spiegelachse senkrecht zu der horizontalen Schwenkachse des Mittelteils. Insbesondere ist auch das Mittelteil spiegelsymmetrisch ausgebildet.

Besonders bevorzugt schneiden sich in der bevorzugten ersten Stützstellung die imaginären Verlängerungen der zwei spiegelsymmetrischen Schwenkachsen in einem Punkt unterhalb der horizontalen Schwenkachse, um die das Mittelteil schwenkbar gelagert ist. Besonders bevorzugt liegt der imaginäre Schnittpunkt der spiegelsymmetrischen Schwenkachsen in einem Abstand zur Kopfstütze, der etwa der Länge der Rückenlehne des Fahrzeugsitzes entspricht. Beispielsweise umfasst das Mittelteil eine Grundplatte in Form eines symmetrischen Trapezes und die spiegelsymmetrischen Schwenkachsen der Seitenflügel erstrecken sich entlang der nicht-parallelen Randseiten des Trapezes.

Gemäß einer vorteilhaften Ausgestaltung umfasst das Befestigungsmittel Mittel zur Höhenverstellung der Kopfstütze. Dadurch kann diese speziell an den Nutzer angepasst und so eine verbesserte Kopfanpassung und optimierter Schutz gewährleistet werden.

Eine weitere vorteilhafte Ausgestaltung der Erfindung sieht vor, dass das Befestigungsmittel mindestens ein drehbar gelagertes Sperrrad mit einer Verzahnung und eine zugehörige Sperrklinke zur lösbaren Fixierung des Mittelteils aufweist. Die Sperrklinke ist beweglich gelagert und wird beispielsweise durch die Schwerkraft oder elastisch vorgespannt auf die Verzahnung des Sperrrads gedrückt. Durch den Eingriff der Sperrklinke in das Sperrrad wird ein unbeabsichtigtes Umklappen der Kopfstütze verhindert.

Bevorzugt umfasst das Befestigungsmittel weiter ein Freigabeelement zum Lösen der Sperrklinke aus dem Eingriff mit dem zugehörigen Sperrrad. Beispielsweise wird die Sperrklinke durch Federkraft auf das Sperrrad gedrückt, und das Freigabeelement umfasst einen Druckknopf, der bei Betätigung derart auf die Feder einwirkt, dass die Sperrklinke gelöst wird.

In einer alternativen Ausgestaltung umfasst die Erfindung einen Fahrzeugsitz mit einer Rückenlehne und einer Kopfstütze gemäß einer der oben aufgeführten Ausgestaltungen. Durch die oben beschriebene Möglichkeit, die Kopfstütze in eine flache Ausgestaltung zu überführen, kann auch ein verbessertes Bauvolumen des Fahrzeugsitzes erreicht werden. Insbesondere in der Parkposition der Kopfstütze zeigt sich der Fahrzeugsitz in einer insgesamt kompakteren Ausgestaltung, da die vertikale Erstreckung der Kopfstütze bezüglich des Fahrzeugsitzes in der Parkposition am geringsten ist.

Bevorzugt ist die Rückenlehne des Fahrzeugsitzes umklappbar. Beispielsweise handelt es sich um die Fahrzeugsitze eines Autos deren Rückenlehne beispielsweise zur Vergrößerung des Kofferraums oder zum Einstieg in den Fond umgeklappt werden können. Befindet sich die Kopfstütze des Fahrzeugsitzes in der Parkstellung so ist zum Umklappen des Fahrzeugsitzes die Platzanforderung an den Innenraum des Autos gegenüber dem Fahrzeugsitz mit der Kopfstütze in Stützstellung geringer. Auch für umklappbare Vordersitze ist eine derartige Ausgestaltung aus oben genannten Gründen hinsichtlich der Sicht und des Bauvolumens vorteilhaft.

Weitere Merkmale und Vorteile der Erfindung ergeben sich aus der folgenden Beschreibung eines nicht einschränkend zu verstehenden Ausführungsbeispiels der Erfindung, die im Folgenden unter Bezugnahme auf die Figuren näher erläutert wird. Insbesondere die verschiedenen Stellungsmöglichkeiten eines Mittelteils und von Seitenflügeln einer erfindungsgemäßen Kopfstütze sollen anhand der Figuren verdeutlicht werden. In dieser Zeichnung zeigen schematisch:
- Fig. 1: eine schematische Ansicht der linken Seite eines ersten Ausführungsbeispiels einer erfindungsgemäßen Kopfstütze mit einem Mittelteil in einer Parkstellung und zwei Seitenflügeln in einer Neutralstellung,
- Fig. 2: eine schematische Ansicht der linken Seite der Kopfstütze gemäß Fig. 1, mit dem Mittelteil in einer ersten Stützstellung und den Seitenflügeln in einer ersten Komfortstellung,
- Fig. 3: eine schematische Ansicht der rechten Seite der Kopfstütze gemäß Fig. 1-2, mit dem Mittelteil in der Parkstellung und den Seitenflügeln in der Neutralstellung,
- Fig. 4: eine schematische Ansicht der rechten Seite der Kopfstütze gemäß Fig. 1-3, mit dem Mittelteil in der ersten Stützstellung und den Seitenflügeln in der Neutralstellung,
- Fig. 5: eine schematische Ansicht der rechten Seite der Kopfstütze gemäß Fig. 1-4, mit dem Mittelteil in einer zweiten Stützstellung und den Seitenflügeln in der Neutralstellung,
- Fig. 6: eine schematische Ansicht der rechten Seite der Kopfstütze gemäß Fig. 1-5, mit dem Mittelteil in der ersten Stützstellung und den Seitenflügeln in der ersten Komfortstellung,
- Fig. 7: eine schematische Ansicht der rechten Seite der Kopfstütze gemäß Fig. 1-6, mit dem Mittelteil in der zweiten Stützstellung und den Seitenflügeln in der ersten Komfortstellung.

In den unterschiedlichen Figuren sind hinsichtlich ihrer Funktion gleichwertige Teile stets mit denselben Bezugszeichen versehen, so dass diese in der Regel auch nur einmal beschrieben werden.

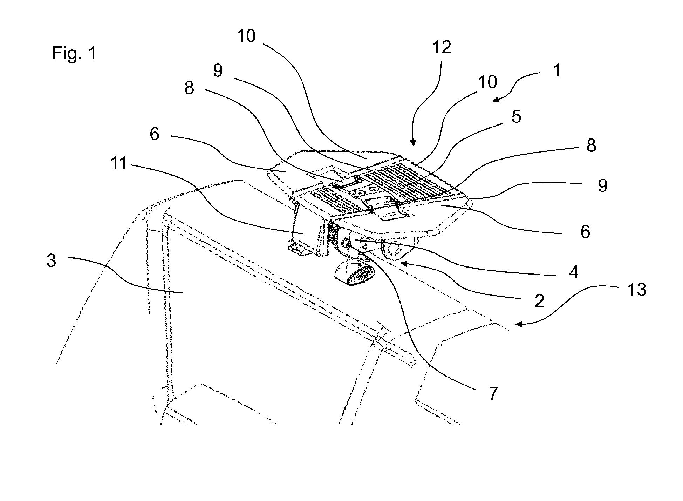

Fig. 1 zeigt schematisch eine perspektivische Ansicht der linken Seite eines ersten Ausführungsbeispiels einer erfindungsgemäßen Kopfstütze 1 in einer Parkstellung. Diese ist mit einem Befestigungsmittel 2 an einer Rückenlehne 3 eines Fahrzeugsitzes befestigt. Im gezeigten ersten Ausführungsbeispiel umfasst das Befestigungsmittel 2 zwei Streben 4, die parallel zueinander angeordnet sind und sich in die Rückenlehne 3 erstrecken. Weiter umfasst die Kopfstütze 1 ein Mittelteil 5 und zwei daran angeordnete Seitenflügel 6. Das Mittelteil 5 ist schwenkbeweglich um eine horizontale Schwenkachse 7 gelagert. Die horizontale Schwenkachse 7 ist ein Holm, der sich zwischen den Streben 4 des Befestigungsmittels 2 erstreckt.

Sowohl das Mittelteil 5 als auch die Seitenflügel 6 umfassen je eine Grundplatte 10, an die eine Polsterung, hier nicht gezeigt, anordbar ist. Die Grundplatte 10 des Mittelteils 5 ist ein symmetrisches Trapez und auch die Grundplatten 10 der Seitenflügel 6 sind trapezförmig ausgebildet, wobei die Ecken abgerundet sind. Jeweils die Basis der trapezförmigen Grundplatten 10 der Seitenflügel 6 ist an einer der nicht-parallelen Randseiten 9 der Grundplatte 10 des Mittelteils 5 schwenkbeweglich angeordnet.

Die Parkstellung der Kopfstütze 1 zeichnet sich dadurch aus, dass die Frontseite 12 des Mittelteils 5 mit einem vertikalen Lot einen Winkel von etwa 90° einschließt. Das Mittelteil 5 ist in Richtung der Rückseite 13 der Rückenlehne 3 verschwenkt und liegt im Wesentlichen parallel zu der Sitzfläche des Fahrzeugsitzes.

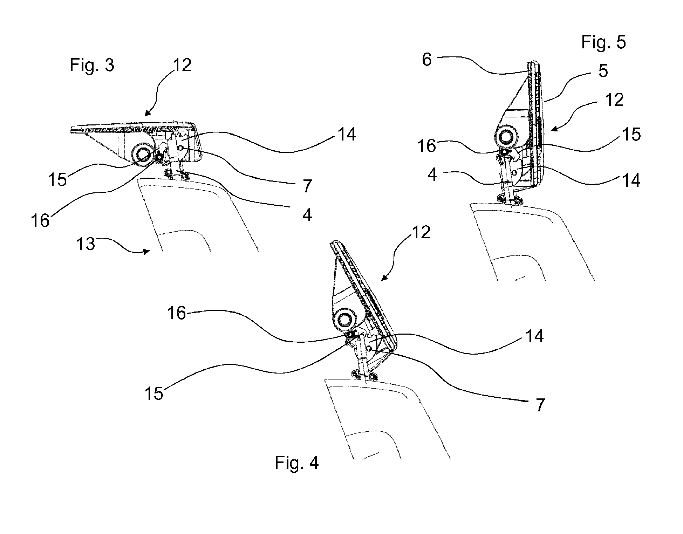

Die Seitenflügel 6 stehen in der Parkstellung des Mittelteils 5 diametral von diesem ab. Die Grundplatten 10 der Seitenflügel 6 schließen in dieser Position einen Winkel von 180° mit der Grundplatte 10 des Mittelteils 5 ein, was im gezeigten Ausführungsbeispiel der Neutralstellung der Seitenflügel 6 entspricht. Fig. 1 zeigt also eine erfindungsgemäße Kopfstütze 1, wobei sich das Mittelteil 5 in der Parkstellung und die Seitenflügel 6 in der Neutralstellung befinden. Eine Ansicht der rechten Seite dieser Position der Kopfstütze 1 ist zusätzlich in Fig. 3 gegeben. In dieser Positionierung des Mittelteils 5 und der Seitenflügel 6 ist die Kopfstütze 1 am flachsten ausgestaltet und auch die vertikale Erstreckung der Kopfstütze 1 bezüglich der Rückenlehne des Fahrzeugsitzes ist minimal.

Das gezeigte Ausführungsbeispiel umfasst ein weiteres Sicherungsmittel 11, dass senkrecht an der Rückseite 13 der Grundplatte 10 des Mittelteils 5 angeordnet ist. Das Sicherungsmittel 11 ist dazu ausgebildet, einen direkten Kontakt des Kopfes an das Mittelteil 5 und insbesondere an Befestigungsmittel 2, horizontale Schwenkachse 7 und Sperrad 14 der sich in der Parkposition befindlichen Kopfstütze 1 zu verhindern. Beispielsweise kann der Bereich des Sicherungsmittels 11 in Richtung der Frontseite 12 der Rückenlehne 3 eine zusätzliche Position aufnehmen.

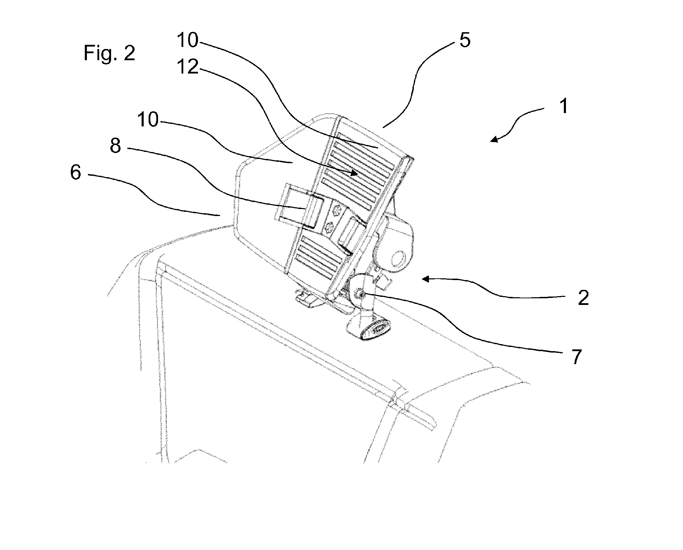

Fig. 2 zeigt schematisch eine perspektivische Ansicht der Kopfstütze 1 gemäß dem in Fig. 1 gezeigten Ausführungsbeispiel. Das Mittelteil 5 der Kopfstütze 1 befindet sich in einer ersten Stützstellung, und die Seitenflügel 6 befinden sich in einer ersten Komfortstellung.

In dieser ersten Komfortstellung schließen die Grundplatten 10 der Seitenflügel 6 jeweils einen Winkel von c.a. 135° mit der Grundplatte 10 des Mittelteil 5 ein. Das Mittelteil 5 ist aus seiner Parkstellung heraus verschwenkt und die Frontseite 12 des Mittelteils 5 schließt mit dem vertikalen einen Winkel von etwa 30° ein.

Die Fig. 3-5 zeigen perspektivische Ansichten der rechten Seite einer erfindungsgemäßen Kopfstütze 1 gemäß Fig. 1 und 2. Die Seitenflügel 6 befinden sich jeweils in der Neutralstellung. Fig. 4 zeigt die Kopfstütze 1, wobei sich das Mittelteil 5 wie in Fig. 2 gezeigt in einer ersten Stützstellung befindet. Die Seitenflügel 6 befinden sich in der Neutralstellung. In Fig. 5 ist die Kopfstütze 1 mit dem Mittelteil 5 in einer zweiten Stützstellung gezeigt. In dieser erstreckt sich das Mittelteil 5 im Wesentlichen vertikal in Verlängerung der Rückenlehne 3. Die Seitenflügel 6 befinden sich erneut in der Neutralstellung.

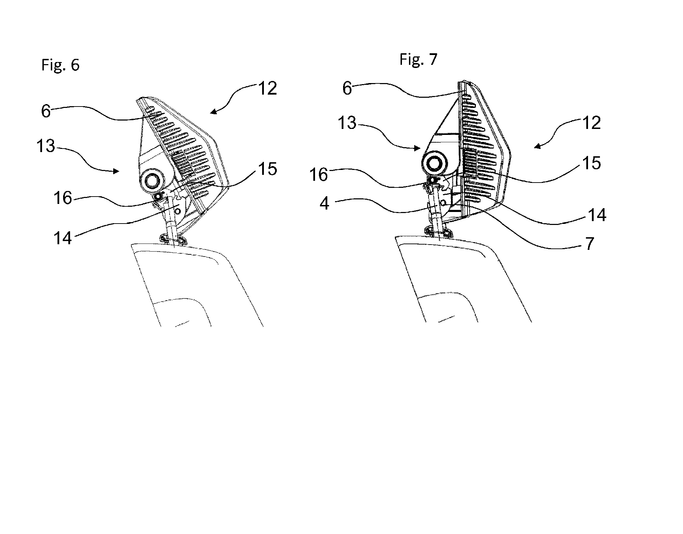

Die Fig. 6, 7 zeigen perspektivische Ansichten der rechten Seite einer erfindungsgemäßen Kopfstütze 1 gemäß der vorangegangenen Figuren. Fig. 6 zeigt die Kopfstütze 1 in einer Position, in der sich das Mittelteil 5 in der ersten Stützstellung befindet. Die Seitenflügel 6 befinden sich in der ersten Komfortstellung. Fig. 7 zeigt die Kopfstütze 1, wobei sich das Mittelteil 5 in der zweiten Stützstellung befindet und die Seitenflügel 6 die erste Komfortstellung einnehmen.

Weiter Kombinationen zwischen verschiedenen Stützstellungen des Mittelteils 5 und weiteren Komfortstellungen der Seitenflügel 6 sind denkbar und erfindungsgemäß vorgesehen.

In den Seitenansichten aus Fig. 3-6 zu erkennen ist außerdem ein Sperrrad 14 mit Verzahnung, das drehbar um die horizontale Schwenkachse 7 des Mittelteils 5 gelagert ist. Weiter ist eine Sperrklinke 15 an der Kopfstütze 1 angeordnet, die den Fig. 3-5 entsprechend, je nach Position des Mittelteils 5, in verschiedene Positionen der Verzahnung des Sperrrads 14 eingreift und damit sowohl das Sperrrad 14 als auch das Mittelteil 5 in seiner Position fixiert.

Zum Lösen der Sperrklinge 15 ist ein Freigabeelement 16 an der Kopfstütze 1 angeordnet. Im gezeigten Ausführungsbeispiel ist das Freigabeelement 16 ein Druckknopf, welcher durch Betätigung die Sperrklinke 15 aus der Verzahnung mit dem Sperrrad 14 löst. Die Sperrklinke 15 ist mittels einer Feder (hier nicht gezeigt) gegen das Sperrrad 14 vorgespannt und die Betätigung des Druckknopfs wirkt der Federkraft entgegen wodurch die Sperrklinke 15 aus der Verzahnung gelöst wird.

### Bezugszeichenliste

- 1: Kopfstütze
- 2: Befestigungsmittel
- 3: Rückenlehne
- 4: Strebe
- 5: Mittelteil
- 6: Seitenflügel
- 7: horizontale Schwenkachse
- 8: spiegelsymmetrische Schwenkachse
- 9: Randseite
- 10: Grundplatte
- 11: Sicherungsmittel
- 12: Frontseite
- 13: Rückseite
- 14: Sperrrad
- 15: Sperrklinke
- 16: Freigabeelement

## Patentansprüche

1. Kopfstütze (1) umfassend ein Mittelteil (5), ein Befestigungsmittel (2) zur Befestigung des Mittelteils (5) an einer Rückenlehne (3) eines Fahrzeugsitzes, und wenigstens einen Seitenflügel (6), der gegenüber dem Mittelteil (5) zwischen einer Neutralstellung und mindestens einer Komfortstellung schwenkbeweglich gelagert ist, und wenigstens in der Komfortstellung fixierbar ist,
**dadurch gekennzeichnet, dass**
das Befestigungsmittel (2) dazu ausgelegt ist, das Mittelteil (5) relativ zur Rückenlehne (3) um eine horizontale Schwenkachse (7) zwischen wenigstens einer Stützstellung und einer Parkstellung schwenkbar zu lagern, und dass das Mittelteil (5) wenigstens in der Stützstellung fixierbar ist.

2. Kopfstütze (1) gemäß dem vorhergehenden Anspruch,
**dadurch gekennzeichnet, dass**
die Kopfstütze (1) zwei seitlich an dem Mittelteil (5) angeordnete Seitenflügel (6) umfasst, die in der Parkstellung des Mittelteils (5) diametral von dem Mittelteil (5) abstehen.

3. Kopfstütze (1) gemäß Anspruch 2,
**dadurch gekennzeichnet, dass**
die Seitenflügel (6) um zwei zueinander spiegelsymmetrisch angeordnete Schwenkachsen (8) schwenkbar sind.

4. Kopfstütze (1) gemäß dem vorhergehenden Anspruch,
**dadurch gekennzeichnet, dass**
sich die imaginären Verlängerungen der zueinander spiegelsymmetrisch angeordneten Schwenkachsen (8) in einem Punkt jenseits der horizontalen Schwenkachse (7), um die das Mittelteil (5) schwenkbar gelagert ist, schneiden.

5. Kopfstütze (1) gemäß einem der vorhergehenden Ansprüche,
**dadurch gekennzeichnet, dass**
das Mittelteil (5) trapezförmig ist, wobei in der Stützstellung die kürzere Grundseite des Trapez einer Rückenlehne (3) eines Fahrzeugsitzes zugewandt ist.

6. Kopfstütze (1) gemäß einem der vorhergehenden Ansprüche,
**dadurch gekennzeichnet, dass**
das Befestigungsmittel (2) Mittel zur Höhenverstellung der Kopfstütze (1) umfasst.

7. Kopfstütze (1) gemäß einem der vorhergehenden Ansprüche,
**dadurch gekennzeichnet, dass**
das Befestigungsmittel (2) mindestens ein Sperrrad (14) mit zugehöriger Sperrklinke (15) zum Eingriff in das Sperrrad (14) zur lösbaren Fixierung des Mittelteils (5) aufweist, und mindestens ein Freigabeelement (16) zum Lösen der Sperrklinke (15) aus dem Eingriff mit dem zugehörigen Sperrrad (14) umfasst.

8. Kopfstütze (1) gemäß dem vorhergehenden Anspruch,
**dadurch gekennzeichnet, dass**
die Sperrklinke (15) das zugehörige Sperrrad (14) über ein Federelement fixiert.

9. Fahrzeugsitz mit einer Rückenlehne (3) und einer daran angeordneten Kopfstütze (1),
**dadurch gekennzeichnet, dass**
die Kopfstütze (1) gemäß einem der vorhergehenden Ansprüche ausgebildet ist.

10. Fahrzeugsitz gemäß dem vorhergehenden Anspruch,
**dadurch gekennzeichnet, dass**
die Rückenlehne (3) des Fahrzeugsitzes umklappbar ist.
